# EUROPÄISCHE PATENTSCHRIFT

(11) **EP 0 771 943 B1**
(45) Veröffentlichungstag und Bekanntmachung des Hinweises auf die Patenterteilung: **13.11.2002**
(21) Anmeldenummer: 96114805.3
(22) Anmeldetag: 16.09.1996
(51) Int. Cl.: F02D 41/38, F02D 31/00, F16H 63/40

(54) **Verfahren und Vorrichtung zur Steuerung eines Kraftfahrzeug-Dieselmotors**
Method and apparatus for controlling a diesel engine for vehicles
Méthode et dispositif de commande d'un moteur diesel pour véhicule

(30) Priorität: 27.10.1995 DE 19540061
(43) Veröffentlichungstag der Anmeldung: 07.05.1997
(73) Patentinhaber: DaimlerChrysler AG, 70567 Stuttgart (DE)
(72) Erfinder: Scherer, Fritz, 72669 Unterensingen (DE); Schmid, Wolfram, 73054 Eislingen (DE)

(56) Entgegenhaltungen:
- DE-A- 3 928 875
- FR-A- 2 630 501
- US-A- 4 493 303
- US-A- 4 601 270
- SEHER D: "DIESEL-EINSPRITZUNG FUER WENIGER EMISSIONEN BEI NUTZFAHRZEUGMOTOREN" ATZ AUTOMOBILTECHNISCHE ZEITSCHRIFT, Bd. 94, 1. Januar 1992, Seiten 31-33, XP000327503
- PATENT ABSTRACTS OF JAPAN vol. 008, no. 120 (M-300), 6. Juni 1984 & JP 59 025039 A (HINO JIDOSHA KOGYO KK), 8. Februar 1984

## Beschreibung

Die Erfindung bezieht sich auf ein Verfahren zur Steuerung eines Dieselmotors eines Kraftfahrzeuges, bei dem die Kraftstoffeinspritzung in Abhängigkeit eines Leistungsbegrenzungskennfeldes und eines Rauchkennfeldes begrenzt wird, sowie auf eine zu dessen Durchführung geeignete Vorrichtung nach dem Oberbegriff des Anspruchs 4.

Ein Verfahren und eine Vorrichtung dieser Art sind in der Offenlegungsschrift DE 39 28 875 A1 offenbart. Bei der dortigen Vorrichtung sind parallel zueinander eine Drehmomentbegrenzungsstufe, welche einen ersten Kraftstoffmengengrenzwert anhand einer Drehmomentbegrenzungskennlinie vorgibt, eine Rauchzahlbegrenzungsstufe, welche einen zweiten Kraftstoffmengengrenzwert anhand eines Rauchkennfeldes vorgibt, sowie eine dritte Stufe angeordnet, welche einen dritten Kraftstoffmengengrenzwert als Funktion der Drehzahl und des Istwertes des Einspritzbeginns vorgibt. Durch eine nachgeschaltete Minimalauswahlstufe wird der kleinste der drei vorgegebenen Kraftstoffmengengrenzwerte als der für den jeweiligen Einspritzvorgang maßgebliche, die tatsächliche Einspritzmenge nach oben begrenzende Grenzwert ausgewählt. Das Rauchkennfeld dient bekanntermaßen dazu, die im stationären Betrieb im allgemeinen durch die Drehmomentbegrenzungskennlinie festgelegte, größtmögliche Einspritzmenge in instationären Betriebszuständen weiter zu vermindern, um Rauchentwicklung zu vermeiden.

Diese Art der Motorsteuerung mittels Leistungsbegrenzungskennfeld und Rauchkennfeld führt in manchen Situationen zu unbefriedigenden Ergebnissen, beispielsweise beim Anfahren aus der Leerlaufdrehzahl, insbesondere mit einem Fahrzeug mit hohem Gewicht an einer Steigung, mit einem Motor mit vergleichsweise geringem Hubraum. Denn beim Anfahren aus der Leerlaufdrehzahl hat sich noch kein bzw. nur wenig Ladedruck aufgebaut, so dass der Luftdurchsatz aufgrund der niedrigen Leerlaufdrehzahl und dem relativ kleinen Hubraum sehr gering ist, was seinerseits dazu führt, dass vom Rauchkennfeld nur wenig Einspritzmenge freigegeben wird. Dadurch entwickelt sich beim Anfahren relativ wenig Drehmoment, so dass das Beschleunigungsverhalten aus dem Fahrzeugstillstand unbefriedigend ist.

Aus der Offenlegungsschrift DE 38 13 390 A1 sind ein Verfahren und eine Vorrichtung zur Steuerung der Kraftstoffzufuhr bei einer ein Fahrzeug antreibenden Brennkraftmaschine bekannt, bei denen die Kraftstoffmenge in höheren Lastbereichen begrenzt wird, diese Begrenzung aber unterhalb eines vorgegebenen Grenzwertes für die Fahrzeugbeschleunigung aufgehoben wird. Damit soll einerseits durch die Volllast-Kraftstoffmengenbegrenzung die Schadstoffemission möglichst gering gehalten werden und andererseits bei erhöhten Fahrwiderständen wie z.B. bei größeren Fahrbahnsteigungen trotzdem die Maximalleistung der Brennkraftmaschine erreichbar bleiben.

Dieses Problem wird durch ein Verfahren mit den Merkmalen des Anspruchs 1 und eine Vorrichtung mit den Merkmalen des Anspruchs 4 gelöst. Bei diesem Verfahren und dieser Vorrichtung erfolgt die rauchzahlbasierende Motormomentbegrenzung in Abhängigkeit von der eingelegten Getriebeschaltstufe und/oder der Fahrzeuggeschwindigkeit entweder anhand eines Normalbetrieb-Rauchkennfeldes oder anhand eines Anfahrbetrieb-Rauchkennfeldes, das gegenüber dem Normalbetrieb-Rauchkennfeld bei gegebener Motordrehzahl eine größere Einspritzmenge zulässt. Damit wird im Anfahrbetrieb, der dadurch erkannt wird, dass eine niedrige Getriebeschaltstufe eingelegt ist und/oder die Fahrgeschwindigkeit unter einer vorgegebenen, geringen Grenzgeschwindigkeit liegt, mit dem Anfahrbetrieb-Rauchkennfeld temporär eine größere Einspritzmenge als mit dem ansonsten im Normalbetrieb verwendeten Normalbetrieb-Rauchkennfeld zugelassen, um einen zufriedenstellende Anfahrbeschleunigung selbst für einen Motor mit kleinem Hubraum und geringer Leerlaufdrehzahl zu gewährleisten, ohne dass im Normalbetrieb zu hohe Rauchzahlen auftreten.

Bei dem nach Anspruch 2 weitergebildeten Verfahren und der nach Anspruch 5 weitergebildeten Vorrichtung wird zusätzlich zur Rauchkennfeldumschaltung eine analoge Umschaltung zwischen einem Normalbetrieb-Leistungsbegrenzungskennfeld und einem davon verschiedenen, bei gegebener Motordrehzahl eine größere Einspritzmenge zulassenden Anfahrbetrieb-Leistungsbegrenzungskennfeld vorgesehen, das speziell beim Anfahren verwendet wird. Damit läßt zusätzlich auch die Leistungsbegrenzungsmaßnahme beim Anfahren durch Umschalten auf das Anfahrbetrieb-Leistungsbegrenzungskennfeld eine weiter erhöhte Einspritzmenge zu, um das Motormoment und damit die Zugkraft zum Anfahren bei eingelegter niedriger Getriebeschaltstufe und/oder niedriger Fahrzeuggeschwindigkeit zu erhöhen.

Bei dem nach Anspruch 3 weiter gebildeten Verfahren werden das Anfahrbetrieb-Rauchkennfeld und, falls vorgesehen, das Anfahrbetrieb-Leistungsbegrenzungskennfeld speziell in denjenigen Fahrbetriebsphasen als kraftstoffeinspritzbegrenzende Kennfelder herangezogen, in denen die niedrigste Getriebeschaltstufe eingelegt ist, was z.B. sehr einfach mit einer entsprechenden Schaltstufensensorik festgestellt werden kann.

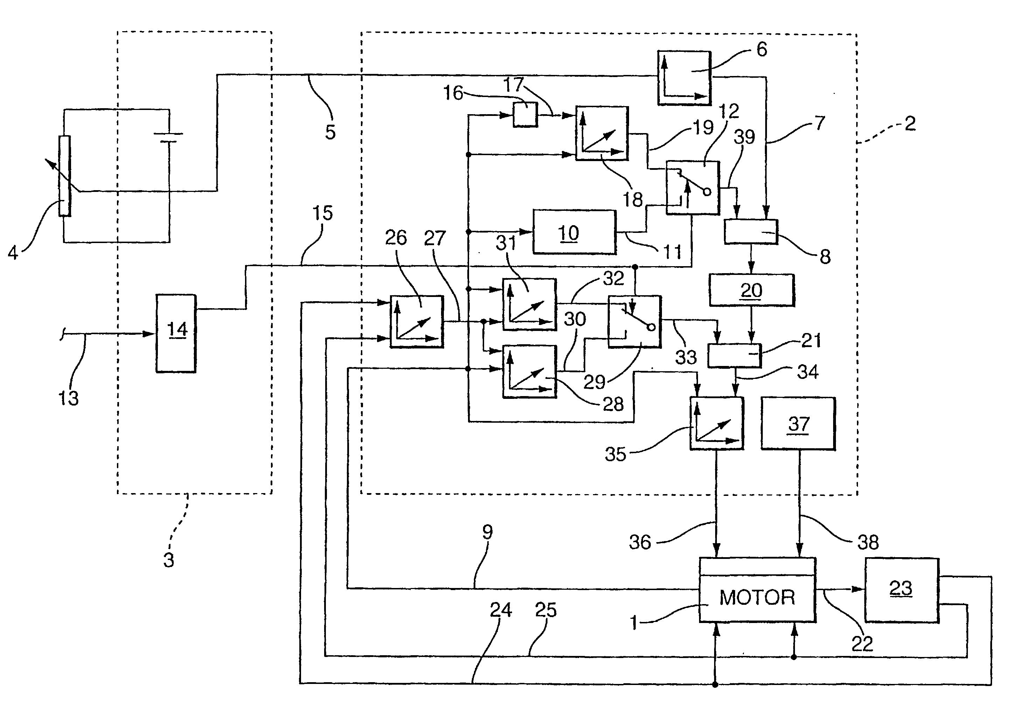

Eine bevorzugte Ausführungsform der Erfindung ist in der Zeichnung dargestellt und wird nachfolgend beschrieben.

Die einzige Figur zeigt ein Blockschaltbild einer Vorrichtung zur Steuerung eines Kraftfahrzeug-Dieselmotors.

Die gezeigte Vorrichtung zur Steuerung eines Dieselmotors (1) eines Kraftfahrzeuges umfaßt ein motorseitiges Motorsteuergerät (2) und eine fahrzeugseitige Motorregelungseinheit (3). Letztere erfaßt die jeweilige Stellung eines Fahrpedals anhand eines Fahrpedalpotentiometers (4) und gibt ein fahrpedalstellungsabnängiges Spannungssignal (5) an eine Anforderungsmomentvorgabestufe (6) im Motorsteuergerät (2) weiter, die anhand einer geeignet vorgegebenen Kennlinie das zur jeweiligen Fahrpedalstellung gehörige und somit vom Fahrer angeforderte Motormoment ermittelt und als Anforderungsmomentsignal (7) an eine nachgeschaltete Minimalauswahleinheit (8) weiterleitet.

An einem zweiten Eingang dieser Minimalauswahleinheit (8) steht ein leistungsbegrenzendes Motormomentgrenzwertsignal (39) an, das wie folgt gewonnen wird. Am Motor (1) wird die Motordrehzahl erfaßt und als Motordrehzahlsignal (9) dem Motorsteuergerät (2) zugeführt. Dort dient es unter anderem als Eingangssignal einer Leistungsbegrenzungsstufe, die aus einer Normalbetrieb-Leistungsbegrenzungsteilstufe (10) und einer dazu parallel angeordneten Anfahrbetrieb-Leistungsbegrenzungsteilstufe (16, 18) sowie einem nachgeordneten, ansteuerbaren Schalter (12) besteht, der umschaltbar entweder das Ausgangssignal (11) der Normalbetrieb-Leistungsbegrenzungsteilstufe (10) oder das Ausgangssignal (19) der Anfahrbetrieb-Leistungsbegrenzungsteilstufe (16, 18) zur Bereitstellung des leistungsbegrenzenden Motormomentgrenzwertsignals (39) durchläßt, welches somit das Ausgangssignal der Leistungsbegrenzungsstufe bildet. Die Normalbetrieb-Leistungsbegrenzungsteilstufe (10) ermittelt anhand eines vorgegebenen Normalbetrieb-Leistungsbegrenzungskennfeldes einen leistungsbegrenzenden Normalbetrieb-Motormomentgrenzwert und gibt das entsprechende Signal (11) an einen ersten Eingang des Schalters (12) ab. Die Anfahrbetrieb-Leistungsbegrenzungsteilstufe umfaßt einen Differenzierer (16), der aus der zugeführten Motordrehzahlinformation (9) den Motordrehzahlgratienten bildet, sowie eine Einheit (18), welche in Abhängigkeit von der Drehzahlinformation (9) und der vom Differenzierer (16) zugeführten Drehzahlgradienteninformation (17) anhand eines geeignet vorgegebenen Anfahrbetrieb-Leistungsbegrenzungskennfeldes einen leistungsbegrenzenden Motormomentgrenzwert für Anfahrbetrieb ermittelt, wobei das Anfahrbetrieb-Leistungsbegrenzungskennfeld bei gegebener Motordrehzahl einen größeren Motormomentgrenzwert zuläßt als das Normalbetrieb-Leistungsbegrenzungskennfeld der Normalbetrieb-Leistungsbegrenzungsteilstufe (10). Das entsprechende Ausgangssignal (19), das die Information über den leistungsbegrenzenden Motormomentgrenzwert im Anfahrbetrieb enthält, ist dem anderen Eingang des Schalters (12) zugeführt.

Zur Weiterleitung entweder des leistungsbegrenzenden Normalbetrieb-Motormomentgrenzwertes (11) oder des leistungsbegrenzenden Anfahrbetrieb-Motormomentgrenzwertes (19) als Ausgangssignal (39) der Leistungsbegrenzungsstufe wird der Schalter (12) vom Ausgangssignal (15) einer Schaltstufenerkennungseinheit (14) der Motorregelungseinheit (3) angesteuert, die anhand eines vom Getriebe kommenden Schaltstufensignals (13) erkennt, ob die niedrigste, erste Getriebeschaltstufe eingelegt ist oder nicht. Wenn die niedrigste Getriebeschaltstufe eingelegt ist, wird der Schalter (12) in die gezeigte Stellung gesteuert, in welcher der leistungsbegrenzende Anfahrbetrieb-Motormomentgrenzwert (19) das Ausgangssignal (39) der Leistungsbegrenzungsstufe bildet. Ist hingegen eine andere Getriebeschaltstufe eingelegt, befindet sich der Schalter (12) in der anderen Stellung, so daß der leistungsbegrenzende Normalbetrieb-Motormomentgrenzwert (11) als Ausgangssignal (39) der Leistungsbegrenzungstufe dient. In jedem Fall wird das Ausgangssignal (39) der Leistungsbegrenzungsstufe von der Minimalauswahleinheit (8) mit dem vom Fahrer gewünschten Motormoment (7) verglichen, und die Minimalauswahleinheit (8) leitet den kleineren Wert hiervon an eine Drehzahlregelfunktionen ausführende Einheit (20) weiter, die ihn ihrerseits an eine zweite Minimalauswahleinheit (21) weitergibt. Einem zweiten Eingang dieser weiteren Minimalauswahleinheit (21) wird zwecks Rauchverhinderung ein rauchzahlbegrenzender Motormomentgrenzwert (33) zugeführt, der wie folgt durch eine Rauchzahlbegrenzungsstufe gewonnen wird.

Die Rauchzahlbegrenzungsstufe beinhaltet eingangsseitig eine Luftmassenbestimmungseinheit (26), welche in Abhängigkeit eines zugeführten Ladedrucksignals (24) und eines zugeführten Ladetemperatursignals (25) anhand eines entsprechend vorgegebenen Kennfeldes die jeweilige Luftmasse bestimmt und als Luftmassensignal (27) ausgibt. Das Ladedrucksignal (24) und das Ladetemperatursignal (25) werden von einer entsprechenden Einheit (23) erzeugt, welcher der Abgasvolumenstrom (22) vom Motor (1) zugeführt ist, wobei die Information über Ladedruck (24) und Ladetemperatur (25) zusätzlich zum Motor (1) selbst geführt ist. Das Luftmassensignal (27) wird sowohl einer Normalbetrieb-Rauchbegrenzungsteilstufe (28) als auch einer dazu parallel angeordneten Anfahrbetrieb-Rauchbegrenzungsteilstufe (31) zugeführt, denen außerdem jeweils die Motordrehzahlinformation (9) eingangsseitig zugeführt wird. Den beiden Teilstufen (28, 31) nachgeschaltet beinhaltet die Rauchzahlbegrenzungsstufe einen ansteuerbaren Schalter (29), der entweder das Ausgangssignal (30) der einen (28) oder das Ausgangssignal (32) der anderen Rauchzahlbegrenzungsteilstufe (31) als Ausgangssignal (33) der Rauchzahlbegrenzungsstufe auswählt, welches der zweiten Minimalauswahleinheit (21) zugeführt ist.

Die Normalbetrieb-Rauchzahlbegrenzungsteilstufe (28) ermittelt in Abhängigkeit von der Motordrehzahl (9) und der Luftmasse (27) anhand eines vorgegebenen Normalbetrieb-Rauchkennfeldes einen rauchzahlbegrenzenden Normalbetrieb-Motormomentgrenzwert als entsprechende Ausgangssignalinformation (30), während analog die Anfahrbetrieb-Rauchzahlbegrenzungsteilstufe (31) in Abhängigkeit derselben Eingangsgrößen, d.h. der Motordrehzahl (9) und der Luftmasse (27), anhand eines abgelegten Anfahrbetrieb-Rauchkennfeldes einen rauchzahlbegrenzenden Anfahrbetrieb-Motormomentgrenzwert als Ausgangssignalinformation (32) erzeugt. Dabei ist das Anfahrbetrieb-Rauchkennfeld so gewählt, daß es verglichen mit dem Normalbetrieb-Rauchkennfeld bei gegebener Motordrehzahl (9) und Luftmasse (27) einen höheren rauchzahlbegrenzenden Motormomentgrenzwert und damit eine höhere Einspritzmenge zuläßt, um zu verhindern, daß die Anfahrbeschleunigung durch die Rauchzahlbegrenzung beim Anfahren auf einen vom Normalbetrieb-Rauchkennfeld vorgegebenen, unerwünscht niedrigen Wert begrenzt wird. Daher wird der Schalter (29) der Rauchzahlbegrenzungsstufe ebenso wie der gleichartige Schalter (12) der Leistungsbegrenzungsstufe vom Ausgangssignal (15) der Schaltstufenerkennungseinheit (14) angesteuert. Dieser Schalter (29) befindet sich daher in der gezeigten Stellung, in welcher er den rauchzahlbegrenzenden Anfahrbetrieb-Motormomentgrenzwert (32) als Ausgangssignal (33) der Rauchzahlbegrenzungsstufe durchläßt, sobald die Schaltstufenerkennungseinheit (14) am vom Getriebe zugeführten Schaltstufensignal (13) erkennt, daß die niedrigste Getriebeschaltstufe eingelegt ist, während der Schalter (29) ansonsten in die andere Stellung gesteuert wird, in welcher der rauchzahlbegrenzende Normalbetrieb-Motormomentgrenzwert (30) als Ausgangssignal (33) der Rauchzahlbegrenzungsstufe dient.

In jedem Fall vergleicht die zweite Minimalauswahleinheit (21) das letztgenannte Signal (33) mit dem Minimum des vom Fahrer gewünschten Motormomentes und des leistungsbegrenzenden Mocormomentgrenzwertes und führt den niedrigeren Wert als Motormomentsollwert (34) einer Förderwinkel-Einstelleinheit (35) zu. Die erste (8) und die zweite Minimalauswahleinheit (21) bilden somit zusammen eine Minimalauswahlstufe, welche den kleinsten Motormomentwert von den drei Motormomentwerten fahrerangefordertes Motormoment (7), leistungsbegrenzender Motormomentgrenzwert (39) und rauchzahlbegrenzender Motormomentgrenzwert (33) als Motormomentsollwert (34) auswählt. Die Förderwinkel-Einstelleinheit (35) bestimmt in Abhängigkeit vom zugeführten Motormomentsollwert (34) und der ebenfalls zugeführten Motormomentdrehzahlinformation (9) den Förderwinkel für die Kraftstoffeinspritzung und leitet diesen als Ausgangssignalinformation (36) an Steckpumpen weiter, die am Motor (1) angeordnet sind. Die Steckpumpen erhalten darüber hinaus eine von einer entsprechenden Förderbeginnbestimmungseinheit (37) des Motorsteuergerätes (2) generierte Signalinformation (38) über den Förderbeginn der Kraftstoffeinspritzung. Ersichtlich ermöglicht die gezeigte Vorrichtung dadurch, daß beim Fahren in der niedrigsten Getriebeschaltstufe ein spezielles Anfahrbetrieb-Leistungsbegrenzungskennfeld und ein spezielles Anfahrbetrieb-Rauchkennfeld verwendet werden, die jeweils gegenüber einem ansonsten verwendeten Normalbetrieb-Leistungsbegrenzungskennfeld bzw. Normalbetrieb-Rauchkennfeld ein höheres Motormoment und damit eine erhöhte Kraftstoffeinspritzmenge zulassen, ein besseres Anfahrverhalten bei ansonstem unverändertem Betriebsverhalten als dies durch Verwendung nur eines einzigen Leistungsbegrenzungskennfeldes und Rauchkennfeldes möglich ist.

Beim Anfahren des Fahrzeugs tritt der Fahrer auf das Fahrpedal, und das Motorsteuergerät (2) erzeugt einen entsprechenden Anforderungsmotormomentwert (7). Weil zunächst noch kein Ladedruck vorhanden ist, wird die Vollasteinspritzmenge an sich durch das Rauchkennfeld begrenzt, wobei nun speziell zum Anfahren durch die Verwendung des Anfahrbetrieb-Rauchkennfeldes eine erhöhte Einspritzmenge zugelassen wird. Mit steigendem Ladedruck gibt das Rauchkennfeld stetig mehr Einspritzmenge frei, und bei Überschreiten eines bestimmten, höheren Ladedruckes greift gegebenenfalls die Leistungsbegrenzung ein, wobei wiederum durch Verwendung des speziellen Anfahrbetrieb-Leistungsbegrenzungskennfeldes in der gegebenen Fahrsituation mehr Einspritzmenge zugelassen wird als im Normalbetrieb beim Fahren in einer höheren Getriebeschaltstufe durch Verwendung des Normalbetrieb-Leistungsbegrenzungskennfeldes. Damit wird zum Anfahren in der untersten Getriebeschaltstufe ein vergleichsweise hohes Zugkraftniveau vom Motor (1) bereitgestellt. Die Maßnahme der Kennfeldumschaltung zwischen Anfahrbetrieb und Normalbetrieb kann folglich das prinzipbedingt schlechtere Anfahrverhalten hubraumkleinerer Motoren jedenfalls teilweise kompensieren.

Zur Realisierung des beschriebenen Verfahrens in Form der gezeigten Vorrichtung ist gegenüber herkömmlichen Motorsteuerungen ohne derartige Kennfeldumschaltung kein wesentlicher Hardware-Zusatzaufwand erforderlich, insbesondere dann, wenn die Schaltstufenerkennungseinheit (14) bereits vorhanden ist, wie dies häufig zur Verwirklichung schaltstufenabhängiger Motorendabregeldrehzahlen der Fall ist. Die Aufteilung der Rauchzahlbegrenzungsstufe sowie der Leistungsbegrenzungsstufe in die jeweiligen beiden parallelen Teilstufen kann bei Bedarf selbstverständlich rein softwaremäßig innerhalb eines einzigen Rauchzahlbegrenzungs- bzw. eines einzigen Leistungsbegrenzungs-Bauelementes vorgenommen werden, ohne daß hierfür zwangläufig zusätzliche Hardware erforderlich ist.

Es versteht sich, daß die durch die Ansprüche festgelegte Erfindung neben der beschriebenen Vorrichtung und dem beschriebenen, von dieser durchgeführten Motorsteuerungsverfahren Modifikationen hiervon umfaßt. So kann beispielsweise vorgesehen sein, die Anfahrbetrieb-Kennfelder auch noch beim Fahren in der zweituntersten Getriebeschaltstufe zu verwenden. Als weitere Modifikation kann anstelle oder zusätzlich zur beschriebenen Kennfeldumschaltung in Abhängigkeit von der eingelegten Getriebeschaltscufe die Umschaltung zwischen Anfahrbetrieb und Normalbetrieb in Abhängigkeit davon vorgenommen werden, ob die Fahrzeuggeschwindigkeit, die bei praktisch allen Kraftfahrzeugen ohnehin durch eine entsprechende Sensorik laufend erfaßt wird, einen vorgegebenen Grenzwert überschreitet. Solange die Fahrzeuggeschwindigkeit unterhalb des Grenzwertes liegt, werden die Anfahrbetrieb-Kennfelder zur Motormomentbegrenzung herangezogen, während bei über dem Grenzwert liegender Fahrzeuggeschwindigkeit die Normalbetrieb-Kennfelder verwendet werden, d.h. die betreffenden Schalter (12, 29) werden dementsprechend fahrzeuggeschwindigkeitsabhängig angesteuert. Zur Berücksichtigung sowohl der Fahrzeuggeschwindigkeitsbedingung als auch der Getriebeschaltstufenbedingung kann zur Kennfeldumschaltung auf Wunsch auch ein Umschaltsignal verwendet werden, das eine logische Verknüpfung des Getriebeschaltstufenerkennungssignals und des Geschwindigkeitsgrenzwertüberschreitungssignals beinhaltet. Selbstverständlich ist es gegebenenfalls auch möglich, nur die Rauchzahlbegrenzung durch Bereitstellung des vom Normalbetrieb-Rauchkennfeldes verschiedenen Anfahrbetrieb-Rauchkennfeldes aufzuteilen und für die Leistungsbegrenzung lediglich ein einziges, einheitliches Leistungsbegrenzungskennfeld sowohl für Anfahrbetrieb wie auch für den sonstigen Normalbetrieb vorzusehen.

## Patentansprüche

1. Verfahren zur Steuerung eines Kraftfahrzeug-Dieselmotors, bei dem
- die Kraftstoffeinspritzung in Abhängigkeit eines Leistungsbegrenzungskennfeldes und eines Rauchkennfeldes begrenzt wird,
**dadurch gekennzeichnet, daß**
- in Abhängigkeit von der eingelegten Getriebeschaltstufe und/oder der Fahrzeuggeschwindigkeit entweder ein Normalbetrieb-Rauchkennfeld (28) oder ein davon verschiedenes, bei gegebener Motordrehzahl eine größere Einspritzmenge zulassendes Anfahrbetrieb-Rauchkennfeld (31) als einspritzmengenbegrenzendes Rauchkennfeld herangezogen wird.

2. Verfahren nach Anspruch 1, weiter
**dadurch gekennzeichnet, daß**
in Abhängigkeit von der eingelegten Getriebeschaltstufe und/oder der Fahrzeuggeschwindigkeit entweder ein Normalbetrieb-Leistungsbegrenzungskennfeld (10) oder ein davon verschiedenes, bei gegebener Motordrehzahl (9) eine größere Einspritzmenge zulassendes Anfahrbetrieb-Leistungsbegrenzungskennfeld (18) als einspritzmengenbegrenzendes Leistungsbegrenzungskennfeld herangezogen wird.

3. Verfahren nach Anspruch 1 oder 2, weiter
**dadurch gekennzeichnet, daß**
das Anfahrbetrieb-Rauchkennfeld (31) und, falls vorhanden, das Anfahrbetrieb-Leistungsbegrenzungskennfeld (18) genau dann als einspritzmengenbegrenzende Kennfelder herangezogen werden, wenn die niedrigste Getriebeschaltstufe eingelegt ist.

4. Vorrichtung zur Steuerung eines Kraftfahrzeug-Dieselmotors, mit
- einer Leistungsbegrenzungsstufe (10, 12, 16, 18) zur kennfeldbasierten Vorgabe eines motordrehzahlabhängigen, leistungsbegrenzenden Motormomentgrenzwertes (39),
- einer Rauchzahlbegrenzungsstufe (26, 28, 29, 31) zur kennfeldbasierten Vorgabe eines luftmassen- und motordrehzahlabhängigen, rauchzahlbegrenzenden Motormomentgrenzwertes (33) und
- einer Minimalauswahlstufe (8, 21), welcher wenigstens der leistungsbegrenzende Motormomentgrenzwert (39) und der rauchzahlbegrenzende Motormomentgrenzwert (33) zugeführt sind und die aus den zugeführten Eingangswerten den kleinsten Wert als maßgebenden Motormomentgrenzwert auswählt,
**dadurch gekennzeichnet, daß**
sie zur Durchführung des Verfahrens nach einem der Ansprüche 1 bis 3 eingerichtet ist und hierzu folgende Merkmale aufweist:
- die Rauchzahlbegrenzungsstufe beinhaltet erstens zwei parallel angeordnete Rauchzahlbegrenzungsteilstufen (28, 31), von denen eine Normalbetrieb-Rauchzahlbegrenzungsteilstufe (28) anhand eines Normalbetrieb-Rauchkennfeldes einen rauchzahlbegrenzenden Normalbetrieb-Motormomentgrenzwert (30) und eine Anfahrbetrieb-Rauchzahlbegrenzungsteilstufe (31) anhand eines Anfahrbetrieb-Rauchkennfeldes, das bei gegebener Motordrehzahl eine größere Einspritzmenge zuläßt als das Normalbetrieb-Rauchkennfeld, einen rauchzahlbegrenzenden Anfahrbetrieb-Motormomentgrenzwert (32) ermittelt, und zweitens einen Schalter (29), mit dem wahlweise der rauchzahlbegrenzende Normalbetrieb-Motormomentgrenzwert oder der rauchzahlbegrenzende Anfahrbetrieb-Motormomentgrenzwert als Ausgangssignal (33) der Rauchzahlbegrenzungsstufe auswählbar ist, wobei
- der Schalter (29) vom Ausgangssignal (15) einer Schaltstufenerkennungseinheit (14) und/oder einer Fahrzeuggeschwindigkeitserkennungseinheit in Abhängigkeit von der eingelegten Getriebeschaltstufe und/oder der Fahrzeuggeschwindigkeit angesteuert wird.

5. Vorrichtung nach Anspruch 4, weiter
**dadurch gekennzeichnet, daß**
- die Leistungsbegrenzungsstufe erstens zwei parallel angeordnete Leistungsbegrenzungsteilstufen, von denen eine Normalbetrieb-Leistungsbegrenzungsteilstufe (10) anhand eines Normalbetrieb-Leistungsbegrenzungskennfeldes einen leistungsbegrenzenden Normalbetrieb-Motormomentgrenzwert (11) und eine Anfahrbetrieb-Leistungsbegrenzungsteilstufe (16, 18) anhand eines Anfahrbetrieb-Leistungsbegrenzungskennfeldes, das bei gegebener Motordrehzahl eine größere Einspritzmenge zuläßt als das Normalbetrieb-Leistungsbegrenzungskennfeld, einen leistungsbegrenzenden Anfahrbetrieb-Motormomentgrenzwert (19) ermitteln, und zweitens einen Schalter (12) beinhaltet, mit dem wahlweise das Ausgangssignal (11) der Normalbetrieb-Leistungsbegrenzungsteilstufe (10) oder das Ausgangssignal (19) der Anfahrbetrieb-Leiscungsbegrenzungsteilstufe (16, 18) als Ausgangssignal (39) der Leistungsbegrenzungsstufe auswählbar ist, wobei
- dieser Schalter (12) vom Ausgangssignal (15) einer Schaltstufenerkennungseinheit (14) und/oder einer Fahrzeuggeschwindigkeitserkennungseinheit in Abhängigkeit von der eingelegten Getriebeschaltstufe und/oder der Fahrzeuggeschwindigkeit angesteuert wird.

## Claims

1. A process for controlling a motor vehicle diesel engine in which
- the fuel injection is limited dependent upon a power limitation characteristic map and a smoke characteristic map,
**characterised in that**
- either a normal mode smoke characteristic map (28) or a different starting mode smoke characteristic map (31) permitting a greater injection amount at a given engine speed is used as an injection-amount-limiting smoke characteristic map dependent upon the gear shift stage selected and/or the vehicle speed.

2. A process in accordance with claim 1, further
**characterised in that**
either a normal mode power limitation characteristic map (10) or a different starting mode power limitation characteristic map (18) permitting a greater injection amount at a given engine speed (9) is used as an injection-amount-limiting power limitation characteristic map dependent upon the gear shift stage selected and/or the vehicle speed.

3. A process in accordance with claim 1 or 2, further
**characterised in that**
the starting mode smoke characteristic map (31) and, where present, the starting mode power limitation characteristic map (18) are used as injection-amount-limiting characteristic maps exactly at the point at which the lowest gear shift stage is selected.

4. A device for controlling a motor vehicle diesel engine with
- a power limitation stage (10, 12, 16, 18) for the characteristic-map-based setting of an engine-speed-dependent, power-limiting engine torque limit value (39),
- a smoke index limitation stage (26, 28, 29, 31) for the characteristic-map-based setting of an air-mass and engine speed-dependent smoke-index-limiting engine torque limit value (33) and
- a minimum selection stage (8, 21) to which are fed at least the power-limiting engine torque limit value (39) and the smoke-index-limiting engine torque limit value (33) and which selects the smallest of the input variables fed to it as the significant engine torque limit value,
**characterised in that**
it is set up to carry out the process in accordance with one of claims 1 to 3 and to this end has the following features:
- the smoke index limitation stage contains, firstly, two parallel positioned smoke index limitation part stages (28, 31), these being a normal mode smoke index limitation part stage (28) which determines a smoke-index-limiting normal mode engine torque limit value (30) using a normal mode smoke characteristic map and a starting mode smoke index limitation part stage (31) which determines a smoke-index-limiting starting mode engine torque limit value (32) using a starting mode smoke characteristic map which permits a greater injection amount at a given engine speed than the normal mode smoke characteristic map, and, secondly, a switch (29) with which it is possible to select either the smoke-index-limiting normal mode engine torque limit value or the smoke-index-limiting starting mode engine torque limit value as the output signal (33) of the smoke index limitation stage,
- the switch (29) is triggered by the output signal (15) of a shift stage identification unit (14) and/or a vehicle speed identification unit dependent upon the gear shift stage selected and/or the vehicle speed.

5. A device in accordance with claim 4, further
**characterised in that**
- the power limitation stage contains, firstly, two parallel positioned power limitation part stages, these being a normal mode power limitation part stage (10) which determines a power-limiting normal mode engine torque limit value (11) using a normal mode power limitation characteristic map and a starting mode power limitation part stage (16, 18) which determines a power-limiting starting mode engine torque limit value (19) using a starting mode power limitation characteristic map which permits a greater injection amount at a given engine speed than the normal mode power limitation characteristic map, and, secondly, a switch (12) with which it is possible to select either the output signal (11) of the normal mode power limitation part stage (10) or the output signal (19) of the starting mode power limitation part stage (16, 18) as the output signal (39) of the power limitation stage,
- this switch (12) is triggered by the output signal (15) of a shift stage identification unit (14) and/or a vehicle speed identification unit dependent upon the gear shift stage selected and/or the vehicle speed.

## Revendications

1. Procédé pour la commande d'un moteur diesel d'un véhicule automobile, selon lequel
- l'injection du carburant est limitée en fonction d'un champ de caractéristiques de limitation de puissance et d'un champ de caractéristiques de fumées,
**caractérisé en ce que**
- en fonction de l'étage de commutation engagé dans la boîte de vitesses et/ou de la vitesse du véhicule, on utilise soit un champ de caractéristiques de fumées en fonctionnement normal (28), soit un champ de caractéristique de fumées de démarrage (31), qui est différent du précédent et permet une quantité d'injection plus importante pour une vitesse de rotation donnée du moteur, en tant que champ de caractéristiques de fumées limitant la quantité d'injection.

2. Procédé selon la revendication 1, **caractérisé en outre en ce qu'**en fonction de l'étage de commutation engagé dans la boîte de vitesses et/ou de la vitesse du véhicule, on utilise soit un champ de caractéristiques de fumées en fonctionnement normal (10), soit un champ de caractéristiques de limitation de puissance lors du fonctionnement au démarrage (18), qui est différent du précédent et permet une quantité d'injection plus importante pour une vitesse de rotation donnée du moteur, en tant que champ de caractéristiques de fumées de limitation de puissance limitant la quantité d'injection.

3. Procédé selon la revendication 1 ou 2, **caractérisé en outre en ce que** le champ de caractéristiques de fumées lors du fonctionnement au démarrage (31) et, dans le cas où il est présent, le champ de limitation de puissance lors du fonctionnement au démarrage (18) sont utilisés en tant que champs de caractéristiques limitant la quantité d'injection précisément lorsque l'étage de commutation le plus faible de la boîte de vitesses est engagé.

4. Dispositif pour commander un moteur diesel de véhicule automobile, comportant
- un étage de limitation de puissance (10, 12, 16, 18) pour la prédétermination, basée sur le champ de caractéristiques, d'une valeur limite du couple moteur (39) qui dépend de la vitesse de rotation du moteur et limite la puissance,
- un étage de limitation de l'indice de fumée (26, 28, 29, 31) pour la prédétermination, basée sur un champ de caractéristiques, d'une valeur limite du couple moteur (33) qui dépend de la masse d'air et de la vitesse de rotation du moteur et limite l'indice de fumée, et
- un étage de sélection de minimum (8, 21), auquel sont envoyés au moins la valeur limite du couple moteur (39), qui'limite la puissance, et la valeur limite du couple moteur (33), qui limite l'indice de fumée, et qui sélectionne parmi les valeurs d'entrée envoyées, la plus faible valeur en tant que valeur limite déterminante du couple moteur,
**caractérisé en ce qu'**il est conçu pour la mise en oeuvre du procédé selon l'une des revendications 1 à 3 et possède à cet effet les caractéristiques suivantes:
- l'étage de limitation de l'indice de fumée contient tout d'abord deux étages partiels (28, 31) de limitation de l'indice de fumée, qui sont montés en parallèle et parmi lesquels un étage partiel (28) de limitation de l'indice de fumée pendant le fonctionnement normal détermine, sur la base d'un champ de caractéristiques de fumées en fonctionnement normal, une valeur limite (30) du couple moteur en fonctionnement normal, qui limite l'indice de fumée, et un étage partiel de limitation de l'indice de fumées lors du fonctionnement de démarrage détermine, sur la base d'un champ de caractéristiques de fumées lors du fonctionnement de démarrage, qui autorise, pour une vitesse de rotation donnée du moteur, une quantité d'injection plus importante que ne le fait le champ de caractéristiques en fonctionnement normal, une valeur limite (32) du couple moteur lors du fonctionnement de démarrage, qui limite l'indice de fumée, et en second lieu un commutateur (29), au moyen duquel peut être sélectionnée aux choix la valeur limite du couple moteur en fonctionnement normal, qui limite l'indice de fumée, ou la valeur limite du couple moteur lors du fonctionnement de démarrage, qui limite l'indice de fumée, en tant que signal (33) de l'étage de limitation de l'indice de fumées,
- le commutateur (29) étant commandé par le signal de sortie (15) d'une unité (14) d'identification de l'étage de commutation et/ou une unité d'identification de la vitesse du véhicule en fonction de l'étage de commutation engagé dans la boîte de vitesses et/ou de la vitesse du véhicule.

5. Dispositif selon la revendication 4, **caractérisé en outre en ce que**
- l'étage de limitation de puissance comprend tout d'abord deux étages partiels de limitation de puissance, montés en parallèle, parmi lesquels un étage partiel (10) de limitation de puissance en fonctionnement normal détermine, sur la base d'un champ de caractéristiques de limitation de puissance en fonctionnement normal, une valeur limite (11) du couple moteur en fonctionnement normal, qui limite la puissance, et un étage partiel (16, 18) de limitation de la puissance lors du fonctionnement de démarrage, sur la base d'un champ de caractéristiques de limitation de puissance lors du fonctionnement de démarrage, qui permet, pour une vitesse de rotation donnée du moteur, une quantité d'injection plus importante que ce que permet le champ de caractéristiques de limitation de puissance en fonctionnement normal, une valeur limite (19) du couple moteur lors du fonctionnement de démarrage, qui limite la puissance, et en second lieu un commutateur (12) et en second lieu un commutateur (12), peut être sélectionné au choix le signal de sortie (11) de l'étage partiel (10) de limitation de puissance en fonctionnement normal ou le signal de sortie (19) de l'étage partiel (16, 18) de limitation de puissance lors du fonctionnement de démarrage, en tant que signal de sortie (39) de l'étage de limitation de puissance,
- ce commutateur (12) est commandé par le signal de sortie (15) d'une unité (14) d'identification d'étage de commutation et/ou une unité d'identification de la vitesse du véhicule en fonction de l'étage de commutation engagé dans la boîte de vitesses et/ou de la vitesse du véhicule.
